# EUROPÄISCHE PATENTSCHRIFT

(11) **EP 3 781 346 B1**
(45) Veröffentlichungstag und Bekanntmachung des Hinweises auf die Patenterteilung: **27.09.2023**
(21) Anmeldenummer: 18752460.8
(22) Anmeldetag: 07.08.2018
(51) Int. Cl.: B21K 1/20, B23K 20/12, F01L 3/14, F01L 3/00

(54) **INNENGEKÜHLTES VENTIL MIT VENTILBODEN UND VERFAHREN ZU DESSEN HERSTELLUNG**
INTERNALLY COOLED VALVE HAVING A VALVE BOTTOM, AND METHOD FOR THE PRODUCTION THEREOF
SOUPAPE À REFROIDISSEMENT INTERNE AVEC FOND DE SOUPAPE ET SON PROCÉDÉ DE FABRICATION

(30) Priorität: 27.11.2017 DE 102017127986
(43) Veröffentlichungstag der Anmeldung: 24.02.2021
(73) Patentinhaber: Federal-Mogul Valvetrain GmbH, 30890 Barsinghausen (DE)
(72) Erfinder: BAYARD, Guido, 44369 Dortmund (DE); KELLERMANN, Stefan, 30890 Barsinghausen (DE); WOLKING, Antonius, 30890 Barsinghausen (DE); ARIEF, Luthfi, 30161 Hannover (DE)
(74) Vertreter: Kurig, Thomas
(86) Internationale Anmeldenummer: PCT/EP2018/071315
(87) Internationale Veröffentlichungsnummer: WO 2019/101374

(56) Entgegenhaltungen:
- DE-A1- 2 433 896
- DE-A1-102015 220 891
- DE-B3-102015 116 009
- US-A1- 2003 015 570
- US-A1- 2006 005 792
- US-A1- 2009 282 675

## Beschreibung

Die vorliegende Erfindung betrifft ein innengekühltes Ventil mit einem durch Reibschweißen eingesetzten Ventilboden.

Bisher werden verschiedene Methoden verwendet, um hohle innengekühlte Ventile für Verbrennungsmotoren herzustellen. Es ist bekannt, einen Ventilschaft durch Reibschweißen zu verschließen. Es ist ebenfalls bekannt, einen Ventilboden einzusetzen, um einen Hohlraum in einem innengekühlten Ventil zu verschließen. Herkömmlicherweise wird bei einem gebauten Ventil der Ventilboden durch Elektronenstrahl- oder Laserschweißen mit dem Ventilkopf verbunden. Es gibt jedoch auch andere Möglichkeiten, einen Hohlraum in einem Innengekühlten Ventil zu verschließen, beispielsweise durch ein Verschließen einer Bohrung in einem Ventilschaft. DE 102015220891 A1, US 2006/0005792 A1 (Basis für den Oberbegriff des Anspruchs 1) und DE 102015116009 B3 (Basis für den Oberbegriff des Anspruchs 7) offenbaren jeweils Hohlraumventile, deren Herstellung ein Reibschweißen eines Ventilbodens mit einem Ventilkopf umfasst, um den Hohlraum des Ventils zu verschließen.

Es ist erstrebenswert, ein Verfahren zur Verfügung zu haben, mit dem sich innengekühlte Ventile insbesondere mit einem hohlen Ventilkopf, sogenannte Hohlkopfventile einfach und kostengünstig herstellen lassen.

Die vorliegende Erfindung betrifft Verfahren zur Herstellung eines innengekühlten Ventils, dessen Ventilboden durch Reibschweißen mit dem Ventilkopf verbunden wurde, sowie ein durch dieses Verfahren hergestelltes Ventil. Bevorzugte Ausführungen sind in den abhängigen Ansprüchen beschrieben.

Gemäß einem ersten Aspekt der vorliegenden Erfindung wird ein Verfahren zum Herstellen eines innengekühlten Ventils gemäß des Anspruchs 1 bereitgestellt.

### GEAENDERTES BLATT

Bisherige Verbindungsverfahren wie Elektronenstrahlschweißen, Laserschweißen oder dergleichen weisen deutliche Nachteile bezüglich der fertigen Materialeigenschaften auf. Ein Reibschweißvorgang hingegen kann eine hohe Materialdichte und ein gleichmäßiges Gefüge bzw. einen relativ gleichmäßigen Gefüge-Übergang ermöglichen.

Ein Aspekt beim Reibschweißen betrifft eine Übertragung des zum Reibschweißen notwendigen Drehmoments, was bei dem vorliegenden Fall sehr ungünstig ausfällt, da der Ventilschaft, an dem das Ventil eingespannt werden kann, viel dünner ist als der Durchmesser der resultierenden Reibschweißnaht. Es kann also eine Gefahr bestehen, den Ventilteller beim Reibschweißen von dem Ventilschaft abzudrehen. Dies ist bei einer Auslegung der Reibschweißparamter zu beachten.

Um die Verfahrensparameter des Verfahrens zu optimieren, kann zudem ein Kontakt der Reibpartner optimiert werden, um sowohl eine Verschweißung in Axialrichtung als auch in Radialrichtung zu erreichen. Das zu verschweißende Ventilbodenelement soll hier nicht nur in einer axialen Richtung, sondern auch in einer Radialrichtung verschweißt werden, wofür im Vergleich zu einer reinen Reibverschweißung in Axialrichtung viel weniger Erfahrungswerte vorliegen.

Bei einer beispielhaften Ausführungsform des Verfahrens wird das Reibschweißen als induktives Reibschweißen ausgeführt. Diese Ausführung gestattet es, das Reibschweißen mit einem geringeren Drehmoment auszuführen, was es insbesondere gestatten kann, den Ventilköper beim Verschweißen mit dem Ventilbodenelement am Ventilschaft einzuspannen, ohne dass der Ventilschaft durch Torsionskräfte abgeschert wird.

Eine weitere beispielhafte Ausführungsform des Verfahrens umfasst weiter, dass der Hohlraum zumindest teilweise mit einem Kühlmittel wie Natrium oder einem Kühlmittel, das Natrium umfasst, gefüllt wird, bevor der Hohlraum durch Reibschweißen verschlossen wird. Somit muss das Ventil nach dem Verschließen der Öffnung unten am Ventilteller nicht noch einmal geöffnet, gefüllt und verschlossen werden. Dazu sollte das Natrium in den Ventilschaft gefüllt werden und vorzugsweise der Ventilschaft durch ein gekühltes Futter oder eine gekühlte Spannzange eingespannt werden.

Bei dem erfindungsgemässen Verfahren weist das Ventilbodenelement und/oder der Ventilkörper eine Eingriffsstruktur auf. Durch die Eingriffsstruktur wird das Ventilbodenelement und/oder der Ventilkörper zentriert eingespannt. Weiterhin kann die Eingriffsstruktur so gestaltet sein, dass sie eine erhöhte Drehmomentübertragung auf das Ventilbodenelement und/oder den Ventilkörper ermöglicht. Hier ist insbesondere eine Zentralbohrung an dem Ventilbodenelement vorgesehen. Das Ventilbodenelement kann zudem mit einer Flankenverzahnung versehen sein, die mit einer entsprechenden Verzahnung an einem Antriebselement in Eingriff gebracht werden kann, um das Drehmoment beim Reibschweißen übertragen zu können. Die Verzahnung verläuft dabei in Umfangsrichtung und die Amplitude der Verzahnung verläuft in Axialrichtung. Die Flankenverzahnung kann als Zickzack- oder als Sägezahnverzahnung ausgeführt sein, um große Drehmomente übertragen zu können. Es ist ebenfalls möglich, die Eingriffsstruktur als ein 3-, 4-, 5- oder 6-Eck-Prisma auszuführen, um die Eingriffsstruktur in einem Backenfutter einspannen zu können. Weiterhin kann die Rückseite des Ventiltellers mit einer Eingriffs- oder Mitnehmerstruktur versehen sein, die es gestattet, ein höheres Drehmoment auf den Ventilteller zu übertragen als es mit dem Schaft alleine möglich wäre. Auch eine Krafteinleitung am Rand des Ventiltellers erscheint problematisch, da durch die geringe axiale Breite des Ventiltellerrandes ebenfalls nur ein relativ geringes Drehmoment übertragen werden kann. Die Eingriffsstrukturen an der Ventilteller-Rückseite und/oder dem Ventilbodenelement kann hier ein Reibschweißen erst ermöglichen.

Bei einer anderen beispielhaften Ausführungsform des Verfahrens umfasst dieses weiter ein Entfernen und/oder Abtragen der Eingriffsstruktur. Dies kann durch Schleifen, Fräsen oder andere spanende oder auch nichtspanende Verfahren erreicht werden. Hier wird zumindest ein Teil der Eingriffsstruktur abgetragen. Ein Teil der Eingriffsstruktur kann an dem Ventilteller verbleiben und beispielsweise als Kühlrippen dienen.

Eine andere beispielhafte Ausführungsform des Verfahrens verwendet ein Ventilbodenelement und einen Ventilkörper mit einer Schweißflächenkontur, die bei einem Reibschweißvorgang einen Schweißaustrieb in dem Hohlraum in einer Form einer (umlaufenden) Kühlrippe erzeugt. Beim Reibschweißen tritt üblicherweise ein Schweißaustrieb auf, der seitlich aus einem Schweißspalt austritt. Da zu erwarten ist, dass auch auf der Seite des Hohlraums ein Schweißaustritt auftritt, können die Schweißkontur und die anderen Reibschweißparameter so gewählt werden, dass der Schweißaustritt, der sich in den Hohlraum erstreckt, die Form einer umlaufenden Kühlrippe aufweist, um einen Wärmeübertrag von dem Ventilboden bzw. dem Rand des Ventiltellers auf das Kühlmittel zu verbessern. Hier kann durch die Form der jeweiligen Schweißflächenkonturen und der

Reibschweißparameter die Form des entstehenden Schweißaustriebs beeinflusst werden. Bei einer weiteren Ausführungsform des Verfahrens umfasst dieses weiter ein Abtragen bzw. Entfernen eines äußeren Schweißaustriebs. Ein Schweißaustrieb an einer Außenseite des Ventils bzw. außen am Ventilboden kann nach dem Reibschweißen abgetragen werden. Es ist zudem vorgesehen, einen äußeren Reibschweißaustrieb nach dem Reibschweißen spanend oder nichtspanend abzutragen.

Das erfindungsgemässe Verfahren umfasst weiter ein Herstellen eines Ventilbodenelements durch Sintern aus einem Ventilbodenelement-Grünteil oder -Braunteil. Dabei wird eine neue Technik angewendet, das Ventilbodenelement herzustellen. Durch die Nutzung von Sintermaterialien ist es einfacher geworden, Kühlrippen oder eine andere Struktur herzustellen, um beispielsweise einen Kühlmittelfluss in dem Hohlraum zu beeinflussen. Alle Design- und Auslegungsparameter lassen sich beim Sintern leicht umsetzen, da das Material bei einer Herstellung eines Grün- oder Braunteils noch nicht die hohe Festigkeit aufweist, die bei einem späteren Einsatz bzw. Betrieb benötigt wird.

Bei dem erfindungsgemässen Verfahren wird das Ventilbodenelement-Grünteil oder -Braunteil durch Metallpulver-Spritzgießen hergestellt. Diese Verfahren gestatten eine schnelle und einfache Herstellung von Ventilbodenelement-Grünteilen oder -Braunteilen, ohne dass dafür ein erheblicher Aufwand an spanender Bearbeitung notwendig ist. Hier kann erstmals ein Ventilbodenelement mit eine Kühl- bzw Kühlflüssigkeits-Leitstruktur und einer Eingriffsstruktur schnell und effizient hergestellt werden, ohne dass die dafür üblicherweise benötigten Umformschritte und spanende Bearbeitung notwendig wären. Es ist weiter vorgesehen, ein Ventilbodenelement-Grünteil durch thermisches oder chemisches Entbindern von einem Binder zu befreien und in ein Braunteil zu verwandeln, bevor das Braunteil durch Sintern zu dem endgültigen Ventilbodenelement gesintert wird. Es ist ebenfalls möglich, das thermische Entbinden als einen Verfahrensschritt des Sinters zu betrachten, wobei das Grünteil so erhitzt wird, dass vor einem eigentlichen Sintern ein thermisches Entbindern stattfindet.

Gemäß einem weiteren Aspekt der vorliegenden Erfindung wird ein innengekühltes Ventil gemäß dem Anspruch 7 bereitgestellt.

Bei einer Ausführungsform des innengekühlten Ventils, weist dieses einen Reibschweißaustrieb an einer Innenseite des Hohlraums auf, der eine Form einer Kühlrippe zeigt. Die Kühlrippe in dem Ventilkopf gestattet einen verbesserten Wärmeübertrag von dem Ventilkopf auf das Kühlmittel. Die Kühlrippe bzw. die zwei Kühlrippen, die bei einem Reibschweißvorgang auftreten können, erstrecken sich von einem vorhergehenden Schweißspalt bis in den Hohlraum.

Bei dem erfindungsgemässen innengekühlten Ventil ist das Ventilbodenelement auf einer dem Hohlraum zugewandten Fläche mit einer Kühlrippen- und/oder Strömungsbeeinflussungsstruktur versehen. Die Innenfläche des Ventilbodenelements kann dabei mit einer Struktur versehen sein, die eine verbesserte Kühlung bzw. einen verbesserten Wärmeübertrag auf das Kühlmittel auch außerhalb einer durch einen Schweißaustrieb erzeugten Kühlrippe verbessern kann. Zusätzlich oder anstelle von Kühlrippen kann auch eine Strömungsleit-Struktur wie ein Strahlleiter-Kegel oder eine Strahl-Umleitungsschnecke an dem Ventilbodenelement angebracht sein, um ein aus dem Ventilschaft strömendes Kühlmittel in dem Hohlraum in dem Ventilkopf zu verteilen.

Im Folgenden wird die Erfindung anhand von schematischen Figuren näher veranschaulicht.
Figuren 1 und 2 zeigen eine perspektivische Ansicht eines Ventilbodenelements.
Figuren 3 und 4 stellen eine perspektivische Ansicht und eine Schnittansicht eines Ventilkörpers dar.
Figuren 5 und 6 zeigen einen Beginn und ein Ende eines erfindungsgemäßen Reibschweißvorgangs.
Figuren 7 und 8 stellen eine Schnitt-Teilansicht und eine perspektivische Teilansicht eines erfindungsgemäßen Ventils dar.
Figur 9 stellt ein Ventilbodenelement dar, das auf einen Reibschweißdorn aufgesetzt ist.

Sowohl in der Beschreibung als auch in den Figuren werden gleiche oder ähnliche Bezugszeichen verwendet, um auf gleiche oder ähnliche Elemente oder Komponenten Bezug zu nehmen.

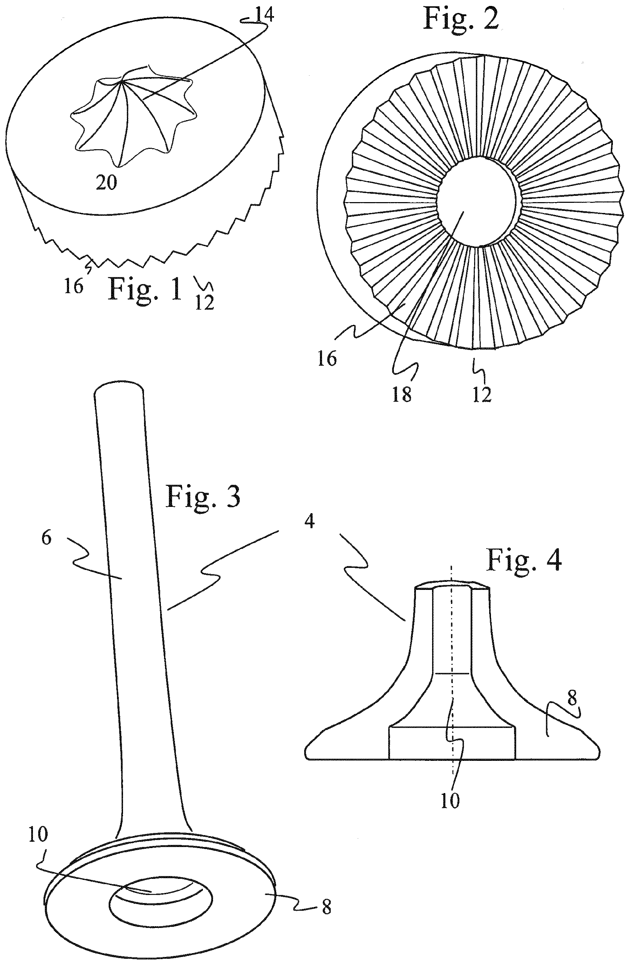

Figur 1 zeigt eine perspektivische Ansicht eines Ventilbodenelements 12. In der Ansicht von Figur 1 ist eine spätere Innenseite 20 des Ventilbodenelements 12 und eine Kühlrippen- / Strömungsbeeinflussungsstruktur 14 dargestellt, die ein von oben aus einem hohlen Ventilschaft strömendes Kühlmittel gleichmäßig in dem Ventilkopf verteilen soll. Unten am dem Ventilbodenelement 12 ist eine Eingriffsstruktur 16 bzw. Drehmoment-Übertragungselement zu erkennen, mit der während eines Reibschweißvorgangs ein Drehmoment auf das Ventilbodenelement 12 übertragen werden kann. Abweichend von der Darstellung kann auch ein Sägezahnprofil verwendet werden, um eine noch bessere Drehmomentübertragung auch bei geringen axialen Anpress- bzw. Reibschweißdrücken zu ermöglichen.

Figur 2 zeigt das Ventilbodenelement 12 von Figur 1 in einer unteren Ansicht, wobei hier die Eingriffsstruktur 18 bzw. das Drehmoment-Übertragungselement als Flankenzahnung zu erkennen ist. In der Mitte ist eine Bohrung als Zentrierelement 18 auf einer Unterseite des Ventilbodenelements 12 angeordnet.

Figuren 3 und 4 stellen eine perspektivische Ansicht und eine Schnittansicht eines

Ventilkörpers dar. Die Ventilkörper 4 umfassen jeweils einen Ventilschaft 6 und einen Ventilteller 8. Von der Seite des Ventiltellers 8 aus öffnet sich ein Hohlraum 10 für ein Kühlmittel wie Natrium oder ein bei Betriebstemperatur flüssiges Material, das Natrium enthält. Durch die Öffnung am Ventilboden kann sehr einfach einerseits ein strukturell stabiles Ventil hergestellt werden, und andererseits kann sehr einfach ein Hohlraum in dem Ventilkörper hergestellt werden, der sich über einen großen Bereich eines Durchmessers des Ventilkopfes 8 erstreckt.

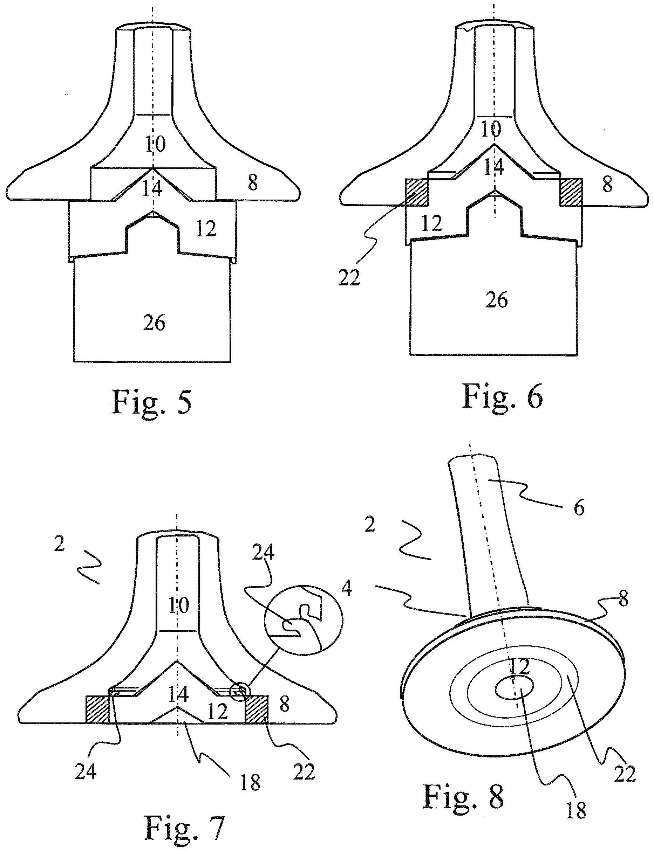

Figuren 5 und 6 zeigen einen Beginn und ein Ende eines erfindungsgemäßen Reibschweißvorgangs. In Figur 5 ist das Ventilbodenelement 12 mit der Kühlrippen- / Strömungsbeeinflussungsstruktur 14 zum Hohlraum 10 des Ventilkörpers 4 weisend an diesem angesetzt. Das Ventilbodenelement 12 ist auf einem Reibschweißdorn 26 aufgespannt oder aufgesetzt, während der Ventilkörper 4 selbst am Ventilschaft 6 eingespannt ist. Zu Beginn des Verfahrens wird der Reibschweißdorn 26 in eine Drehung versetzt, wodurch sich die Berührungsfläche zwischen Ventilbodenelement 12 und Ventilkörper 4 durch Reibungswärme erwärmt. Dies kann ebenfalls durch eine zusätzliche Induktionsheizung weiter erwärmt werden.

Figur 6 stellt ein Ende eines erfindungsgemäßen Reibschweißvorgangs dar. Das Ventilbodenelement 12 wurde in den Ventilkörper 4 hineingedrückt, nachdem sich die jeweiligen Metalle hinreichend erwärmt haben, um eine ausreichende Verformbarkeit zu erreichen. Ein Reibschweißaustrieb ist hier der Klarheit halber nicht dargestellt.

Figur 7 stellt eine Schnitt-Teilansicht durch den Kopf eines erfindungsgemäßen Ventils 2 dar. Ein überstehender Rest des Ventilbodenelements 12 wurde durch einen spanenden Vorgang abgetragen, sodass ein im Wesentlichen ebener Ventilboden erreicht wurde. Das Ventilbodenelement 12 ist über den Schweißbereich bzw. die Wärmebeeinflussungszone 22 mit dem Ventilköper 4 bzw. dem Ventilkopf 8 verbunden. Ein an einer Außenseite aufgetretener Reibschweißaustrieb wurde ebenfalls abgetragen. An einer Innenseite 20 bzw. in dem Hohlraum 10 erstreckt sich ein Reibschweißaustrieb. Durch geeignete Verfahrensparameter sowie eine geeignete Materialwahl konnte der Reibschweißaustrieb 24 in Form einer Kühlrippe erzeugt werden. Dies kann ebenfalls den Wärmeübertrag von dem Ventilkopf 8 auf ein in dem Hohlraum 10 befindliches (jedoch nicht dargestelltes) Kühlmittel verbessern.

Figur 8 zeigt eine perspektivische Teilansicht eines erfindungsgemäßen Ventils 2. Der Ventilschaft 6 läuft dabei in dem Ventilkopf 8 aus. Die Öffnung des Hohlraumes aus Figur 3 ist durch das Ventilbodenelement 12 verschlossen. Die Eingriffselemente des Ventilbodenelements 12 aus Figur 2 wurden abgetragen. Lediglich ein Teil der Bohrung des Zentrierelements 18 ist noch am Boden des Ventilkopfes zu erkennen. Der Schweißbereich / die Wärmebeeinflussungszone ist durch gestrichelte Linien angedeutet.

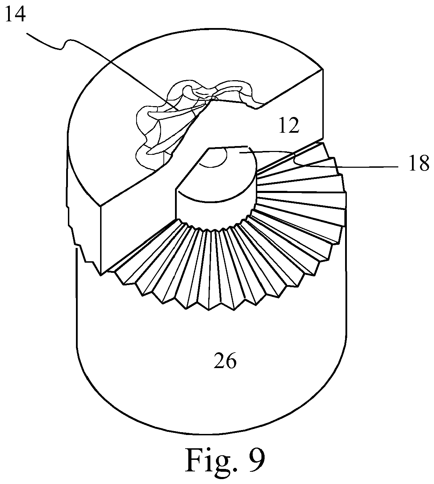

Figur 9 stellt ein Ventilbodenelement 12 dar, das auf einem Reibschweißdorn 24 aufgesetzt ist. Der Reibschweißdorn 26 ist mit Strukturen versehen, die komplementär zu dem Eingriffselement 16 des Ventilbodenelements 12 zur Übertragung eines Drehmoments und komplementär zu dem Zentrierelement 18 des Ventilbodenelements 12 sind. Die Form des Eingriffs-/Zentrierelements entscheidet darüber, wie und wieviel Drehmoment übertragen werden kann, und ob das Ventilbodenelement 12 weiter eingespannt werden soll oder muss. Es wird entgegen der Darstellung eine sägezahnförmige Flankenverzahnung bevorzugt, um das Drehmoment unabhängig von einer axialen Kraftkomponente von dem Reibschweißdorn 26 auf das Ventilbodenelement 12 übertragen zu können.

### Bezugszeichenliste

- 2: Innengekühltes Ventil mit Reibverschweißter Bodenelement
- 4: Rohling / Ventilkörper eines innengekühlten V4ntils
- 6: Ventilschaft eines innengekühlten Ventils
- 8: Ventilkopf eines innengekühlten Ventils
- 10: Hohlraum eines innengekühlten Ventils
- 12: Ventilbodenelement
- 14: Kühlrippen- / Strömungsbeeinflussungsstruktur
- 16: Eingriffsstruktur des Ventilbodenelements
- 18: Zentrierelement des Ventilbodenelements
- 20: Innenseite des Ventilbodenelements
- 22: Schweißbereich / Wärmebeeinflussungszone
- 24: Reibschweißaustrieb an einer Innenseite des Hohlraums in Form einer Kühlrippe
- 26: Reibschweißdorn

## Patentansprüche

1. Verfahren zur Herstellung eines innengekühlten Ventils (2) umfassend Bereitstellen eines Ventilkörpers (4) mit einem Ventilschaft (6), der in einem Ventilkopf (8) ausläuft, wobei der Ventilkörper (4) einen Hohlraum (10) aufweist, der zum Ventilkopf (8) hin offen ist,
Bereitstellen eines Ventilbodenelements (12), und
Verschließen des Hohlraums (10) mit dem Ventilbodenelement (12) durch Reibverschweißen des Ventilbodenelements (12) mit dem Ventilkopf (8),
**dadurch gekennzeichnet, dass**
das Ventilbodenelement (12) und/oder der Ventilkörper (4) eine Eingriffsstruktur (16) aufweist bzw. aufweisen, mit der das Ventilbodenelement (12) und/oder der Ventilkörper (4) zentriert eingespannt wird und ein Drehmoment auf das Ventilbodenelement (12) und/oder den Ventilkörper (4) übertragen wird,
wobei das Verfahren umfasst
Herstellen eines Ventilbodenelement-Grünteils oder -Braunteils durch Metallpulver-Spritzgießen, und Herstellen des Ventilbodenelements (12) durch Sintern aus dem Ventilbodenelement-Grünteil oder -Braunteil,
wobei das Ventilbodenelement (12) auf einer dem Hohlraum (10) zugewandten Fläche mit einer Kühlrippen- und/oder Strömungsbeeinflussungsstruktur (14) versehen wird.

2. Verfahren gemäß Anspruch 1, wobei das Reibschweißen als induktives Reibschweißen ausgeführt wird.

3. Verfahren gemäß Anspruch 1 oder 2, weiter umfassend zumindest Teilweise füllen des Hohlraums (10) mit einem Kühlmittel wie Natrium oder einem Kühlmittel das Natrium umfasst, bevor der Hohlraum (10) durch Reibschweißen verschlossen wird.

4. Verfahren gemäß Anspruch 1, weiter umfassend Entfernen und/oder Abtragen der Eingriffsstruktur (16).

5. Verfahren gemäß einem der vorstehenden Ansprüche, wobei das Ventilbodenelement (12) und der Ventilkörper (4) eine Schweißflächenkontur aufweisen, die bei einem Reibschweißvorgang einen Schweißaustrieb (24) in dem Hohlraum (10) in einer gewünschten Form einer Kühlrippe erzeugt.

6. Verfahren gemäß Anspruch 5, weiter umfassend Entfernen eines äußeren Schweißaustriebs.

7. Innengekühltes Ventil (2) mit einem Ventilkörper (4), der einen Ventilkopf (8) und einen Ventilschaft (6) umfasst, wobei in dem Ventilkörper (4) ein Hohlraum (10) angeordnet ist, der sich bis in den Ventilkopf (8) hinein erstreckt, wobei der Hohlraum (10) durch einen Ventilboden verschlossen ist, der durch Reibschweißen mit dem Ventilkopf (8) verbunden ist, wobei das Ventilbodenelement (12) auf einer dem Hohlraum (10) zugewandten Fläche mit einer Kühlrippen- und/oder Strömungsbeeinflussungsstruktur versehen ist, **dadurch gekennzeichnet, dass** das Ventilbodenelement (12) und/oder der Ventilkörper (4) eine Eingriffsstruktur (16) aufweist bzw. aufweisen, mit der das Ventilbodenelement (12) und/oder der Ventilkörper (4) zentriert eingespannt werden kann und ein Drehmoment auf das Ventilbodenelement (12) und/oder den Ventilkörper (4) übertragen werden kann, und wobei das Ventilbodenelement (12) durch Sintern aus einem Ventilbodenelement-Grünteil oder -Braunteil hergestellt ist, das durch Metallpulver-Spritzgießen hergestellt ist.

8. Innengekühltes Ventil (2) nach Anspruch 7, wobei der Reibschweißaustrieb (24) an einer Innenseite (20) des Hohlraums (10) die Form einer Kühlrippe aufweist, die einen verbesserten Wärmeübertrag von dem Ventilkopf (8) auf das Kühlmittel ermöglicht.

## Claims

1. A method for manufacturing an internally cooled valve (2), comprising providing a valve body (4) having a valve stem (6) that ends in a valve head (8), wherein the valve body (4) has a cavity (10) that is open towards the valve head (8),
providing a valve base element (12), and
closing the cavity (10) with the valve base element (12) by friction welding the valve base element (12) to the valve head (8),
**characterized in that**
the valve base element (12) and / or the valve body (4) have / has an engagement structure (16) with which the valve base element (12) and / or the valve body (4) may be centrally clamped and a torque may be transmitted to the valve base element (12) and / or to the valve body (4),
wherein the method comprises
producing a valve base element green compact or brown compact by metal powder injection molding and producing the valve base element (12) by sintering from a valve base element green compact or brown compact,
wherein the valve base element (12) is provided with a cooling rib and / or flow-influencing structure (14) on a surface facing the cavity (10).

2. The method according to claim 1, wherein the friction welding is carried out as inductive friction welding.

3. The method according to claim 1 or 2, further comprising at least partially filling the cavity (10) with a coolant such as sodium or a coolant containing sodium, before the cavity (10) is closed by friction welding.

4. The method according to claim 1, further comprising removal and / or ablation of the engagement structure (16).

5. The method according to one of the preceding claims, wherein the valve base element (12) and the valve body (4) have a welding surface contour, which in a friction welding operation produces a weld expulsion (24) in the cavity (10) in a desired shape of a cooling rib.

6. The method according to claim 5, further comprising removal of an outer weld expulsion.

7. An internally cooled valve (2) having a valve body (4) that comprises a valve head (8) and a valve stem (6), wherein a cavity (10) that extends into the valve head (8) is situated in the valve body (4), wherein the cavity (10) is closed by a valve base that is joined to the valve head (8) by friction welding, wherein the valve base element (12) is provided with a cooling rib and / or flow-influencing structure on a surface facing the cavity (10).
**characterized in that**
the valve base element (12) and / or the valve body (4) have / has an engagement structure (16) with which the valve base element (12) and / or the valve body (4) may be centrally clamped and a torque may be transmitted to the valve base element (12) and / or to the valve body (4), and
wherein the valve base element (12) is produced by sintering from a valve base element green compact or brown compact, which is produced by metal powder injection molding.

8. The internally cooled valve (2) according to claim 7, wherein the friction weld expulsion (24) on an inner side (20) of the cavity (10) has the shape of a cooling rib which allows improved heat transfer from the valve head (8) to the coolant.

## Revendications

1. Procédé de fabrication d'une soupape (2) à refroidissement interne, comprenant le fait de prévoir un corps de soupape (4) avec une tige de soupape (6) qui se termine en une tête de soupape (8), le corps de soupape (4) présentant une cavité (10) qui est ouverte vers la tête de soupape (8),
le fait de prévoir un élément de base (12) de soupape, et
le fait de fermer la cavité (10) avec l'élément de base (12) de soupape par soudage par friction de l'élément de base (12) de soupape à la tête de soupape (8), **caractérisé en ce que**
l'élément de base (12) de soupape et/ou le corps de soupape (4) présente(nt) une structure d'engagement (16) avec laquelle l'élément de base (12) de soupape et/ou le corps de soupape (4) est(sont) serré(s) de manière centrée et un couple est apte à transmis à l'élément de base (12) de soupape et/ou au corps de soupape (4),
le procédé comprenant
le fait de fabriquer une partie verte ou d'une partie brune d'élément de base de soupape par moulage par injection de poudre métallique, et de fabriquer l'élément de base (12) de soupape par frittage à partir de la partie verte ou de la partie brune d'élément de base de soupape,
l'élément de base (12) de soupape étant pourvu d'une structure (14) d'ailettes de refroidissement et/ou d'influence de l'écoulement sur une surface tournée vers la cavité (10).

2. Procédé selon la revendication 1, dans lequel le soudage par friction est réalisé sous la forme d'un soudage par friction inductif.

3. Procédé selon la revendication 1 ou la revendication 2, comprenant en outre le remplissage au moins partiel de la cavité (10) avec un agent de refroidissement tel que du sodium ou un agent de refroidissement comprenant du sodium, avant que la cavité (10) ne soit fermée par soudage par friction.

4. Procédé selon la revendication 1, comprenant en outre l'enlèvement et/ou l'abrasion de la structure d'engagement (16).

5. Procédé selon l'une quelconque des revendications précédentes, dans lequel l'élément de base (12) de soupape et le corps de soupape (4) présentent un contour de surface de soudage qui, lors d'une opération de soudage par friction, génère une excroissance de soudage (24) dans la cavité (10) sous une forme souhaitée d'ailette de refroidissement.

6. Procédé selon la revendication 5, comprenant en outre le fait d'éliminer une excroissance de soudure extérieur.

7. Soupape (2) à refroidissement interne ayant un corps de soupape (4), qui comprend une tête de soupape (8) et une tige de soupape (6), une cavité (10) étant agencée dans le corps de soupape (4), qui s'étend jusque dans la tête de soupape (8), la cavité (10) étant fermée par un élément de base de soupape, qui est relié à la tête de soupape (8) par soudage par friction, l'élément de base (12) de soupape étant pourvu, sur une surface tournée vers la cavité (10), d'une structure d'ailettes de refroidissement et/ou d'influence sur l'écoulement, **caractérisée en ce que** l'élément de base (12) de soupape et/ou le corps de soupape (4) présente ou présentent une structure d'engagement (16). avec laquelle l'élément de base (12) de soupape et/ou le corps de soupape (4) est apte à être serré de manière centrée et un couple est apte à être transmis à l'élément de base (12) de soupape et/ou au corps de soupape (4), et dans lequel l'élément de base (12) de soupape est fabriqué par frittage à partir d'une pièce verte ou d'une pièce brune d'élément de base de soupape, qui est fabriquée par moulage par injection de poudre métallique.

8. Soupape (2) à refroidissement interne selon la revendication 7, dans laquelle l'excroissance (24) de soudage par friction sur un côté interne (20) de la cavité (10) a la forme d'une ailette de refroidissement qui permet un transfert de chaleur amélioré depuis la tête de soupape (8) vers le fluide de refroidissement.
